# EUROPÄISCHE PATENTANMELDUNG

(11) **EP 4 541 526 A1**
(43) Veröffentlichungstag der Anmeldung: **23.04.2025**
(21) Anmeldenummer: 24198114.1
(22) Anmeldetag: 03.09.2024
(51) Int. Cl.: B25J 15/06

(54) **SAUGGREIFER MIT FLEXIBLER MEMBRAN**

(30) Priorität: 20.10.2023 DE 102023128965
(71) Anmelder: J. Schmalz GmbH, 72293 Glatten (DE)
(72) Erfinder: Schaaf, Walter, 72250 Freudenstadt-Grüntal (DE); Haungs, Jürgen, 72250 Freudenstadt (DE)
(74) Vertreter: DREISS Patentanwälte PartG mbB

(57) **Zusammenfassung**

Die Erfindung betrifft einen Sauggreifer (10) zum Greifen eines Gegenstands (12) mittels Unterdruck, umfassend eine flexible Membran (14) und eine Stützstruktur (16), auf welcher die Membran (14) mit einer Saugseite (18) aufliegt, wobei die erste Stützstruktur eine Mehrzahl von Stegen (36) aufweist, welche entlang eines Umfangs um einen Zentralabschnitt (30) derart verteilt angeordnet sind, dass zwischen benachbarten Stegen ein Zwischenraum (38) gebildet ist, wobei die Membran die Zwischenräume mit einem jeweiligen Membranabschnitt (40) überspannt, wobei die Membran derart flexibel ausgebildet ist, dass die Membranabschnitte, insbesondere durch Anlegen eines Unterdrucks in dem Saugraum, in die Zwischenräume verformbar sind, um den zu greifenden Gegenstand mit dem jeweiligen Kontaktabschnitt zu kontaktieren. Die Erfindung betrifft auch ein Verfahren zum Greifen eines Gegenstands mit einem solchen Sauggreifer sowie eine Handhabungsanlage mit einem solchen Sauggreifer.

## Beschreibung

Die Erfindung betrifft einen Sauggreifer zum Greifen eines Gegenstands mittels Unterdruck, ein Verfahren zum Greifen eines Gegenstands unter Verwendung eines solchen Sauggreifers sowie eine Handhabungsanlage umfassend einen solchen Sauggreifer.

Sauggreifer sind in vielfältiger Art und Weise aus dem Stand der Technik bekannt und werden beispielsweise dazu verwendet, um gestapelte, starre und/oder biegeschlaffe Werkstücke zu handhaben. Solche Sauggreifer haben üblicherweise einen Saugkörper, der einen Sauginnenraum begrenzt und eine Saugöffnung aufweist. Die Saugöffnung ist von einer Dichtlippe umgeben, welche zum Greifen eines Gegenstands an dessen Oberfläche angelegt oder angedrückt wird.

Üblicherweise wird nach dem Anlegen der Dichtlippe an den Gegenstand der Sauginnenraum mit Unterdruck beaufschlagt (bspw. durch eine Pumpe, ein Gebläse, einen Ejektor oder einen Unterdruckspeicher) und somit der Gegenstand angesaugt. Es sind aber auch sogenannte Passivgreifer bekannt, bei denen ein zum Ansaugen erforderlicher Unterdruck in dem Sauginnenraum durch Verformung des Saugkörpers bereitgestellt wird.

Aus der US20090194651A1 ist ein Sauggreifer bekannt, welcher ein Gelelement umfasst, das eine Anlagefläche zur Anlage an einen zu greifenden Gegenstand bildet. An einer der Anlagefläche abgewandten Seite ist ein elastisch verformbares Federelement vorgesehen, welche eine konkave Form aufweist.

Die Erfindung beschäftigt sich mit der Aufgabe, Gegenstände unterschiedlicher Beschaffenheit sicher und kostengünstig zu greifen.

Diese Aufgabe wird erfindungsgemäß durch einen Sauggreifer mit den Merkmalen des Anspruchs 1 gelöst. Der Sauggreifer ist zum Greifen eines Gegenstands mittels Unterdruck ausgebildet. Insofern ist der Sauggreifer zum Ansaugen eines Gegenstands, bspw. eines Werkstücks, ausgebildet.

Der Sauggreifer umfasst eine flexible Membran, insbesondere Kunststoffmembran. Die Membran weist eine Saugseite und eine der Saugseite gegenüberliegende Oberseite auf. Die Membran weist an ihrer Saugseite eine Kontaktfläche zur Anlage an einen zu greifenden Gegenstand auf. Die Saugseite ist insofern in einer Greifkonfiguration, in welcher ein Gegenstand von dem Sauggreifer gegriffen bzw. angesaugt ist, dem Gegenstand zugewandt. Die Membran begrenzt mit ihrer Saugseite einen Saugraum, welcher durch eine Saugöffnung offen ist. Die Saugöffnung ist insbesondere von einem Randabschnitt der Saugseite der Membran begrenzt. Insbesondere erstreckt sich die Membran von einem Zentralabschnitt des Sauggreifers nach radial außen, wobei die Membran an einem dem Zentralabschnitt abgewandten freien Ende einen Randabschnitt aufweist, welcher die Saugöffnung umschließt. Die Kontaktfläche ist insbesondere nicht Teil des Randabschnitts.

Der Sauggreifer umfasst außerdem eine erste Stützstruktur, auf welcher die Membran mit der Saugseite aufliegt. Die erste Stützstruktur ist in dem Saugraum angeordnet. Die erste Stützstruktur ist insofern auf derjenigen Seite der Membran angeordnet, auf der auch die Kontaktfläche bereitgestellt ist. In einer Greifkonfiguration, in welcher ein Gegenstand von dem Sauggreifer gegriffen bzw. angesaugt ist, ist die erste Stützstruktur insofern zwischen der Membran und dem Gegenstand angeordnet.

Die erste Stützstruktur weist eine Mehrzahl von Stegen auf. Vorzugsweise erstrecken sich die Stege von einem Zentralabschnitt des Sauggreifers, insbesondere von einem Zentralabschnitt der ersten Stützstruktur, radial weg. Die Stege können sowohl einen geraden als auch einen gebogenen oder gewinkelten Verlauf haben.

Die Membran ist vorzugsweise derart ausgebildet, dass sie mit dem Randabschnitt ihrer Saugseite über die Stege der ersten Stützstruktur radial hervorsteht. Der Randabschnitt bildet insbesondere eine Dichtlippe zur Anlage an den zu greifenden Gegenstand, vorzugsweise derart, dass die Saugöffnung bei Anlage des Randabschnitts an dem Gegenstand durch den Gegenstand geschlossen ist.

Die Stege der ersten Stützstruktur sind derart voneinander beabstandet, insbesondere entlang eines Umfangs um den Zentralabschnitt derart verteilt angeordnet, dass zwischen benachbarten Stegen jeweils ein Zwischenraum gebildet ist. Die Membran überspannt die Zwischenräume mit einem jeweiligen Membranabschnitt, insbesondere derart, dass zwischen zwei benachbarten Stegen der ersten Stützstruktur eine nach unten offene Unterdruckkammer gebildet ist, welche insbesondere bei Anlage des Randabschnitts des Sauggreifers an einen zu greifenden Gegenstand von dem Gegenstand geschlossen wird. In einer Ausgangskonfiguration dringt die Membran insofern insbesondere nicht oder nur teilweise in die Zwischenräume ein.

Die Membranabschnitte, welche die Zwischenräume überspannen, weisen an der Saugseite jeweils einen Kontaktabschnitt oder Kontaktflächenabschnitt zum Kontaktieren des Gegenstands auf. Die Kontaktabschnitte bilden gemeinsam die Kontaktfläche. Die Kontaktfläche ist insofern durch eine Mehrzahl von voneinander beabstandeten, insbesondere durch die Stege der ersten Stützstruktur getrennten, Flächenabschnitten gebildet. Insofern ist die Kontaktfläche insbesondere keine zusammenhängende Fläche. Die Kontaktabschnitte sind aber insbesondere durch eine zusammenhängende Materialfläche der Membran bereitgestellt.

Die Membran ist derart flexibel, insbesondere elastisch verformbar, ausgebildet, dass die Membranabschnitte, insbesondere durch Anlegen eines Unterdrucks (kann aktiv oder passiv bereitgestellt sein) in dem Saugraum und/oder durch Drücken der Membranschnitte in Richtung der ersten Stützstruktur, in die Zwischenräume verformbar sind, um den zu greifenden Gegenstand mit dem jeweiligen Kontaktabschnitt zwischen zwei benachbarten Stegen der ersten Stützstruktur zu kontaktieren. Die Membran ist insofern derart flexibel ausgebildet, dass die Membranabschnitte in einen jeweiligen Zwischenraum zwischen zwei Stegen der ersten Stützstruktur eindringen können, um den Gegenstand zu kontaktieren. Insbesondere liegen die Stege der ersten Stützstruktur in einer Greifkonfiguration ebenfalls abschnittsweise mit einer der Saugseite der Membran abgewandten Unterseite an dem Gegenstand an. Vorzugsweise liegen in einer Greifkonfiguration sowohl die Stege als auch zumindest eine Teilmenge der Membranabschnitte zumindest abschnittsweise an dem Gegenstand an. Bei einer ebenen Oberfläche des Gegenstands können in der Greifkonfiguration eine Unterseite der Stege und die Kontaktabschnitte miteinander bündig sein. Insbesondere sind die Zwischenräume zum Ansaugen eines Gegenstands mit Unterdruck derart beaufschlagbar, dass die Membran bei Überschreiten einer Unterdruckschwelle in die Zwischenräume verformt wird.

Bei dem vorgeschlagenen Sauggreifer wird ein zu greifender Gegenstand also zwischen den Stegen der Stützstruktur durch die flexible Membran kontaktiert, insbesondere zusätzlich zu einer Kontaktierung des Gegenstands durch einen Randabschnitt der Membran (Dichtlippe). Auf diese Weise wird eine besonders große Gesamtanlagefläche des Sauggreifers an dem Gegenstand bereitgestellt, was ein zuverlässiges Greifen des Gegenstands begünstigt. Dadurch, dass die Membran in die Zwischenräume verformbar ist und dort den Gegenstand kontaktiert, ist die Membran einerseits durch die Stützstruktur stabilisiert, andererseits wird durch die Stützstruktur ein Evakuieren der Zwischenräume begünstigt. Bei dem vorgeschlagenen Sauggreifer sind insofern Stützfunktion und Kontaktfunktion voneinander getrennt. Eine solche Funktionstrennung ermöglicht es, für die jeweilige Funktion besonders geeignete Materialien zu verwenden. Insbesondere sind Stützstruktur und Kontaktfläche von separaten Bauteilen bereitgestellt. Zudem wird hierdurch eine einfache und nachhaltigere Entsorgung ermöglicht. Darüber hinaus ist bei der vorgeschlagenen Ausgestaltung eine Wartung bzw. Reparatur des Sauggreifers, bspw. infolge von Verschleiß, erleichtert. So kann die Membran - welche durch ihren Kontakt mit dem Gegenstand regelmäßig einem betriebsbedingten Verschleiß unterliegt - bei Bedarf auf einfache Weise ausgetauscht werden, ohne, dass auch die Stützstruktur zwangsläufig erneuert werden muss. Ein Austausch der Membran kann manuell geschehen. Es ist aber auch denkbar, dass die Membran automatisiert ausgetauscht wird. Beispielsweise ist es denkbar, dass die Membran als Endlosware (von der Rolle) bereitgestellt wird.

Der vorgeschlagene Sauggreifer kann als Passivgreifer ausgebildet oder verwendbar sein. Insofern kann ein zum Ansaugen eines Gegenstands erforderlicher Unterdruck passiv erzeugbar sein. Hierzu kann beispielsweise der Sauggreifer zunächst mit der Saugöffnung auf den Gegenstand aufgesetzt werden und anschließend die Membranabschnitte mit ihrer Saugseite an den Gegenstand angedrückt werden. Dies kann beispielsweise dadurch realisiert werden, dass eine äußere Druckkraft in Richtung auf den Gegenstand zu auf die Membran, insbesondere auf die die Zwischenräume überspannenden Membranabschnitte, ausgeübt wird. Diese Druckkraft kann beispielsweise über eine optionale zweite Stützstruktur des Sauggreifers ausgeübt werden (siehe unten). Hierbei kann ein Teil der im Saugraum (also zwischen Membran und Gegenstand) befindlichen Luft zunächst entweichen (z.B. seitlich zwischen Dichtlippe und Gegenstand oder durch einen Anschlussnippel) und bei Entspannung des Sauggreifers (also z.B. bei Wegnahme der äußeren Druckkraft) ein initialer Ansaug-Unterdruck im Saugraum entstehen. Zur Handhabung kann der Sauggreifer dann insbesondere entgegen der Richtung der zuvor aufgebrachten äußeren Druckkraft angehoben werden. In dem initial angesaugten Zustand bewirkt das Anheben, dass die Gewichtskraft des Gegenstands als Zugkraft auf den Sauggreifer wirkt. Die Zugkraft bewirkt eine elastische Verformung der Membran derart, dass ein Volumen des Saugraums sich vergrößert und somit eine weitere Senkung des Druckniveaus im Saugraum bewirkt wird.

Für einen passiven Betrieb kann es vorteilhaft sein, wenn der Saugraum nur einseitig durch die Saugöffnung hin offen ausgebildet ist, insbesondere trichterförmig ausgebildet ist. Weiterhin kann es vorteilhaft sein, wenn die erste Stützstruktur zu der Saugöffnung hin konkav ausgebildet ist.

Es ist auch denkbar, dass der Sauggreifer aktiv mit Unterdruck beaufschlagt wird, also ein Druckniveau im Saugraum, insbesondere nach einem Aufsetzen des Sauggreifers auf einen Gegenstand, durch eine Unterdruckerzeugungseinrichtung (bspw. Pumpe, Gebläse, Ejektor oder Unterdruckspeicher) abgesenkt wird.

Im Rahmen einer vorteilhaften Weiterbildung kann der Sauggreifer wenigstens einen Unterdruckanschluss zum Anschluss an eine, insbesondere externe, Unterdruckversorgungseinrichtung aufweisen. Der Unterdruckanschluss ist insbesondere über einen Fluidkanal mit dem Saugraum strömungsverbunden. Insofern ist der Unterdruckanschluss zur Versorgung des Saugraums mit Unterdruck ausgebildet. Insbesondere ist der Unterdruckanschluss mit den zwischen den Stegen der ersten Stützstruktur gebildeten Zwischenräumen strömungsverbunden. Der wenigstens eine Unterdruckanschluss ist vorzugsweise an dem Zentralabschnitt angeordnet. Der wenigstens eine Unterdruckanschluss kann als Anschlussnippel ausgebildet sein. Bei manchen Ausgestaltungen können mehrere über den Sauggreifer verteilte Unterdruckanschlüsse vorgesehen sein.

Die Membran kann einteilig (monolithisch) ausgebildet sein. Die Membran kann aus mehreren Teilen zusammengesetzt sein. Die Membran ist insbesondere ein Flachmaterial, vorzugsweise Materialschicht oder Folie. Die Membran kann als Endlosmaterial (von der Rolle) bereitgestellt sein.

Die Membran kann aus einem homogenen Material hergestellt sein. Die Membran kann abschnittsweise aus unterschiedlichen Materialien gefertigt sein, insbesondere dann, wenn sie aus mehreren Teilen zusammengesetzt ist. Vorzugsweise ist die Membran aus einem elastisch verformbaren Material, weiter vorzugsweise aus einem Elastomer, weiter vorzugsweise aus einem Latexmaterial, hergestellt. Das elastisch verformbare Material kann in vorteilhafter Weise als Schaumstoffmaterial bereitgestellt sein. Insofern kann die Membran aus einem Schaumstoff hergestellt sein.

Die erste Stützstruktur ist insbesondere elastisch verformbar ausgebildet. Insbesondere kann die erste Stützstruktur derart ausgebildet sein, dass sie durch Anlagen eines Unterdrucks in dem Saugraum verformbar ist. Insbesondere ist die erste Stützstruktur derart flexibel verformbar ausgebildet, dass der Sauggreifer eine kontrahierte Konfiguration und eine expandierte Konfiguration einnehmen kann, wobei der Saugraum in der kontrahierten Konfiguration ein minimales Volumen und in der expandierten Konfiguration ein maximales Volumen hat.

Die erste Stützstruktur ist vorzugsweise aus einem Kunststoff hergestellt.

Die erste Stützstruktur ist vorzugsweise zur Saugöffnung hin konkav gewölbt ausgebildet.

Im Rahmen einer vorteilhaften Weiterbildung können die Stege der ersten Stützstruktur verästelt ausgebildet sein, insbesondere derart, dass sich die Membran zwischen den Ästen mit ihrer Kontaktfläche an den zu greifenden Gegenstand anlegen kann. Insofern können von zumindest einer Teilmenge der Stege jeweils weitere Unterstege (Äste) abgehen. Die Zwischenräume zwischen benachbarten Stegen können insofern durch die Äste unterteilt sein. Mit anderen Worten können zwischen benachbarten Ästen und/oder zwischen den Ästen und den Stegen selbst Zwischenräume gebildet sein, in welche die Membran verformbar, insbesondere einsaugbar, ist, um einen zu greifenden Gegenstand mit ihrer Kontaktfläche zu kontaktieren. Eine verästelte Struktur bietet eine besonders stabile Stütze für die Membran und ermöglicht gleichzeitig eine homogene Kontaktierung des Gegenstands durch die Membran.

Im Rahmen einer vorteilhaften Weiterbildung können zumindest eine Teilmenge der Stege der ersten Stützstruktur an einem jeweiligen freien Enden einen Vorsprung aufweisen. Bei einer solchen Ausgestaltung sind die Randbereiche der Membran besonders unterstützt, was eine zuverlässige und definierte Anlage des Randabschnitts (Dichtlippe) an einen Gegenstand begünstigt. Vorzugsweise erstreckt sich der Vorsprung in Umfangsrichtung um den Zentralabschnitt von dem jeweiligen Steg weg. Die Vorsprünge können jeweils gekrümmt verlaufen. Insbesondere können die Vorsprünge der Stege auf einer gemeinsamen Kreisbahn um den Zentralabschnitt liegen.

Die Stege der ersten Stützstruktur können verschieden ausgebildet sein. Insbesondere können die Stege der ersten Stützstruktur verschiedene Querschnittsformen aufweisen, beispielsweise rund, rechteckig, rechteckförmig mit abgerundetes Ecken, elliptisch, oder rohrförmig. Als besonders vorteilhaft hat sich herausgestellt, wenn die Stege der ersten Stützstruktur einen runden oder ovalen Querschnitt aufweisen.

Im Rahmen einer vorteilhaften Weiterbildung kann die Membran mit den Stegen der ersten Stützstruktur verbunden sein. Auf diese Weise kann ein Abheben der Membran von der ersten Stützstruktur verhindert werden. Die Membran kann insofern in der Nähe der Zwischenräume gehalten werden, was ein zuverlässiges Einsaugen der Membran in die Zwischenräume zum Greifen des Gegenstands begünstigt. Die Membran kann stoffschlüssig mit der ersten Stützstruktur, insbesondere den Stegen der ersten Stützstruktur, verbunden sein, insbesondere durch eine Klebverbindung. Es ist auch denkbar, dass die erste Stützstruktur teilweise in die Membran eingebettet ist. Alternativ oder zusätzlich kann die Membran über eine oder mehrere Befestigungselemente, bspw. in Form von Klammern, an der ersten Stützstruktur gehaltert sein.

Im Rahmen einer vorteilhaften Weiterbildung kann der Sauggreifer eine zweite Stützstruktur aufweisen. Die zweite Stützstruktur ist auf einer der Saugseite gegenüberliegenden Oberseite der Membran angeordnet. Insofern ist die Membran zwischen der ersten Stützstruktur und der zweiten Stützstruktur angeordnet. Mit anderen Worten, die erste Stützstruktur und die zweite Stützstruktur sind an gegenüberliegenden Seiten der Membran angeordnet. Eine solche Ausgestaltung ist besonders stabil. Zudem ermöglicht es die zweite Stützstruktur, ein Abheben der flexiblen von der ersten Stützstruktur zu verhindern, was ein einfaches Einsaugen der Membran in die Zwischenräume der ersten Stützstruktur begünstigt. Darüber hinaus kann die zweite Stützstruktur dazu dienen, die Membran an einen zu greifenden Gegenstand zu drücken (siehe unten).

In vorteilhafter Weise kann die zweite Stützstruktur eine Mehrzahl von Streben aufweisen, welche sich radial von einem Zentralabschnitt weg erstrecken.

Bei dem Zentralabschnitt kann es sich um einen Zentralabschnitt der zweiten Stützstruktur handeln, welcher insbesondere von einem Zentralabschnitt der erste Stützstruktur verschieden ist.

Es ist auch denkbar, dass die Stege der ersten Stützstruktur und die Streben der zweiten Stützstruktur von einem gemeinsamen Zentralabschnitt abkragen. Der gemeinsame Zentralabschnitt kann insbesondere ein Zentralabschnitt des Sauggreifers sein. Der Zentralabschnitt kann einen Anschlussnippel zur Verbindung des Sauggreifers mit einem Manipulator aufweisen. Der Zentralabschnitt kann einen Unterdruckanschluss zum Anschluss an eine Unterdruckversorgung aufweisen.

Vorzugsweise sind die Streben der zweiten Stützstruktur und die Stege der ersten Stützstruktur entlang eines Umfangs um den jeweiligen oder gemeinsamen Zentralabschnitt zueinander versetzt angeordnet, insbesondere derart, dass eine jeweilige Strebe der zweiten Stützstruktur, vorzugsweise mittig, zwischen zwei Stegen der ersten Stützstruktur angeordnet ist. Insofern können die Streben der zweiten Stützstruktur derart um den Zentralabschnitt verteilt angeordnet sein, dass eine jeweilige Strebe der zweiten Stützstruktur bei Blickrichtung von oben, also auf die der Saugseite gegenüberliegende Oberseite der Membran, zwischen zwei Stegen der ersten Stützstruktur angeordnet sind. Insofern können die Streben der zweiten Stützstruktur mit den zwischen den Stegen der ersten Stützstruktur gebildeten Zwischenräumen überlappen. Eine solche Ausgestaltung begünstigt eine stabile Fixierung der Membran. Darüber hinaus ermöglicht es eine solche Anordnung der Streben, über die Streben die Membran in die Zwischenräume und somit an einen zu greifenden Gegenstand zu drücken.

Insbesondere kann die zweite Stützstruktur dazu ausgebildet sein, die Membranabschnitte der Membran, welche die Zwischenräume zwischen den Stegen der ersten Stützstruktur überspannen, in die Zwischenräume und insbesondere gegen einen zu greifenden Gegenstand zu drücken.

Dies kann in vorteilhafter Weise dadurch realisiert sein, dass die Streben der zweiten Stützstruktur, insbesondere die gesamte zweite Stützstruktur, axial auf die erste Stützstruktur zu bewegbar sind, um die Membranabschnitte in die Zwischenräume zwischen den Stegen der ersten Stützstruktur zu drücken. Beispielsweise kann nach Anlage des Randabschnitts der Membran an eine Oberfläche des zu greifenden Gegenstands die zweite Stützstruktur, z.B. durch eine von außen aufgebrachte Druckkraft, gegen die Membran gedrückt werden, insbesondere derart, dass die Streben der zweiten Stützstruktur die Membranabschnitte in die Zwischenräume zwischen den Stegen der ersten Stützstruktur und insbesondere an den zu greifenden Gegenstand drückt.

Im Rahmen einer vorteilhaften Weiterbildung können die Streben der zweiten Stützstruktur in einem Andrückbereich ein im Vergleich zu der übrigen Strebe weicheres Material, bspw. aus einem Schaumstoff, aufweisen. Auf diese Weise kann die Strebe einerseits eine hohe Stabilität aufweisen und andererseits die Membran sanft andrücken. Insbesondere können durch das vergleichsweise weiche Material im Andrückbereich Unebenheiten an der Oberfläche des Gegenstands ausgeglichen werden. Der Andrückbereich kann insbesondere ein Endbereich an einem dem Zentralabschnitt abgewandten freien Ende der Strebe sein.

Im Rahmen einer vorteilhaften Weiterbildung können die Streben der zweiten Stützstruktur radial über die Stege der ersten Stützstruktur hervorstehen. Ein freies Ende der Streben der zweiten Stützstruktur kann insofern von dem Zentralabschnitt radial weiter entfernt sein als ein freies Ende der Stege der ersten Stützstruktur. Insbesondere können die Streben der zweiten Stützstruktur länger sein als die Stege der ersten Stützstruktur. Eine solche Ausgestaltung erleichtert das Andrücken des Randabschnitts der Membran (Dichtlippe), was eine zuverlässige Abdichtung des Saugraums begünstigt.

Die Streben der zweiten Stützstruktur können verschieden ausgebildet sein. Insbesondere können die Streben verschiedene Querschnittsformen aufweisen, beispielsweise rund, rechteckig, rechteckförmig abgerundete Ecken, elliptisch, oder rohrförmig.

Im Rahmen einer vorteilhaften Weiterbildung können die Streben der zweiten Stützstruktur an ihren freien Enden miteinander verbunden sein. Eine solche Ausgestaltung erhöht die Stabilität der zweiten Stützstruktur und begünstigt das Andrücken der Dichtlippe an den Gegenstand. Insbesondere können die Streben derart miteinander verbunden sein, dass ein sich um den Zentralabschnitt erstreckender Ring gebildet ist. Es ist auch denkbar, dass zumindest eine Teilmenge der Streben an einem jeweiligen freien Ende in Umfangsrichtung um den Zentralabschnitt abkragende Vorsprünge aufweist.

Im Rahmen einer weiteren vorteilhaften Weiterbildung können sich die Streben der zweiten Stützstruktur entlang ihrer Erstreckung von dem Zentralabschnitt weg (also nach radial außen), insbesondere linear, verbreitern. Bei Blickrichtung auf die Oberseite der Membran können die Streben insbesondere dreieckförmig ausgebildet sein.

Die erste Stützstruktur und/oder die zweite Stützstruktur können jeweils einteilig (monolithisch) ausgebildet sein. Beispielsweise ist es denkbar, dass die erste Stützstruktur und/oder die zweite Stützstruktur ein 3D-gedrucktes Bauteil oder ein Stanzteil ist. Eine solche Ausgestaltung ist besonders robust und in der Herstellung einfach. Insbesondere kann durch 3D-Druck eine Sauggreifergeometrie flexibel angepasst werden. Die erste Stützstruktur und/oder die zweite Stützstruktur können auch jeweils mehrteilig ausgebildet sein.

Vorzugsweise ist die Membran aus einem anderen Material hergestellt als die erste Stützstruktur und/oder die zweite Stützstruktur. Insbesondere ist die erste Stützstruktur und/oder die zweite Stützstruktur aus einem steiferen Material als die Membran hergestellt.

Der Sauggreifer kann grundsätzlich verschiedene Geometrien einnehmen. Beispielsweise kann der Sauggreifer bei Blickrichtung auf die Oberseite der Membran eine runde oder rechteckige, insbesondere quadratische, Grundform einnehmen. Der Sauggreifer kann rotationssymmetrisch zu einer Mittelachse ausgebildet sein, insbesondere entlang derer sich der Zentralabschnitt erstreckt. In vorteilhafter Weise kann der der Sauggreifer trichterförmig ausgebildet sein. Der Sauggreifer kann auch eine asymmetrische Grundform aufweisen.

Der Sauggreifer kann, insbesondere an dem Zentralabschnitt, einen Anschlussnippel aufweisen. Der Anschlussnippel kann zum Befestigen des Sauggreifers an einer Handhabungsvorrichtung und/oder zur pneumatischen Verbindung des Saugraums mit der Umgebung oder einer Unterdruckversorgung, insbesondere einer Pumpe, einem Gebläse, einem Ejektor und/oder einem Unterdruckspeicher, ausgebildet sein.

Der Begriff "Zentral"abschnitt meint im vorliegenden Zusammenhang nicht zwingend eine in Bezug auf eine Grundform des Sauggreifers exakt mittige Anordnung. Stattdessen ist mit "zentral" lediglich ein Bereich gemeint, der bei Blickrichtung von oben, also auf die Oberseite der Membran, innerhalb einer von dem Randabschnitt der Membran begrenzten Fläche liegt.

Der Sauggreifer kann außerdem einen mit dem Saugraum strömungsverbundenen Überdruckanschluss zum Anschluss an eine Überdruckversorgung, insbesondere Druckluftversorgung, aufweisen. Auf diese Weise kann der Saugraum bei Bedarf aktiv belüfte werden, was ein schnelles Ablegen eines angesaugten Gegenstands begünstigt. Es ist auch möglich, dass ein Belüften des Saugraum lediglich durch Leckage zwischen der Membran und dem Gegenstand erfolgt.

Wie vorstehend erwähnt, kann die Membran, bspw. bei Verschleiß, manuell ausgetauscht werden. Es ist aber auch denkbar, dass die Membran automatisiert austauschbar ist.

Im Rahmen einer vorteilhaften Weiterbildung kann der Sauggreifer eine Membran-Erneuerungseinrichtung zum, insbesondere automatisierten, Erneuern von verbrauchter Membran umfassen. Die Membran-Erneuerungseinrichtung kann insbesondere eine Membran-Vorratseinrichtung zum Speichern von neuer, also unverbrauchter Membran und vorzugsweise auch eine Membran-Aufnahmeeinrichtung zum Aufnehmen von verbrauchter Membran aufweisen. Die Membran-Erneuerungseinrichtung kann außerdem eine Membran-Fördereinrichtung zum Fördern von neuer Membran zu der Stützstruktur umfassen.

Insbesondere kann die Membran als Flachbandmaterial, vorzugsweise "Endlosmaterial", bereitgestellt sein. Dann kann die Membran-Vorratseinrichtung eine Vorratsrolle und die Membran-Aufnahmeeinrichtung eine entsprechende Aufnahmerolle aufweisen. Die Membran kann insofern einenends auf der Vorratsrolle und anderenends auf der Aufnahmerolle aufgerollt sein. Eine solche Ausgestaltung ermöglicht es auf besonderes einfache und nachhaltige Weise eine verschlissene Membran auszutauschen bzw. bei Bedarf einen "unverbrauchten" Abschnitt an Membran bereitzustellen.

Die vorstehend genannte Aufgabe wird auch durch Verfahren zum Greifen eines Gegenstands mittels eines vorstehend beschriebenen Sauggreifers gelöst. Die vorstehend im Zusammenhang mit dem Sauggreifer als solchen beschriebenen Vorteile und Merkmale können auch zur Ausgestaltung der Verfahren dienen, sodass auf vorstehende Offenbarung hierzu verwiesen wird.

Gemäß einem ersten Aspekt (aktiver Betrieb) wird zunächst der Sauggreifer in einer Kontaktrichtung (Aufsetzrichtung) auf den Gegenstand aufgesetzt, sodass der Randabschnitt (Dichtlippe) der Membran des Sauggreifers eine Oberfläche des Gegenstands kontaktiert und somit den Saugraum abdichtet. Im Anschluss wird ein Unterdruck in dem Saugraum des Sauggreifers derart bereitgestellt, dass die Membranabschnitte, welche die Zwischenräume zwischen zwei Stegen der ersten Stützstruktur überspannen, optional unter zusätzlichem Andrücken in Kontaktrichtung, insbesondere mittels der zweiten Stützstruktur, in die Zwischenräume verformt werden, sodass die Membranabschnitte mit ihrer Saugseite die Oberfläche des Gegenstands kontaktieren. Im Anschluss kann der Sauggreifer zusammen mit dem angesaugten Gegenstand beispielsweise mittels eines Manipulators an einen anderen Ort verbracht werden.

Bei einer Ausgestaltung des Sauggreifers mit Unterdruckanschluss kann das Bereitstellen des Unterdrucks in dem Saugraum insbesondere das Bereitstellen von Unterdruck an dem Unterdruckanschluss, bspw. über eine externe Unterdruckerzeugungseinrichtung, umfassen.

Gemäß einem zweiten Aspekt (passiver Betrieb) wird der Sauggreifer zunächst in einer Kontaktrichtung (Aufsetzrichtung) auf den Gegenstand aufgesetzt, sodass der Randabschnitt (Dichtlippe) der Membran des Sauggreifers eine Oberfläche des Gegenstands kontaktiert und somit den Saugraum abdichtet. Im Anschluss werden die Membranabschnitte, welche die Zwischenräume zwischen zwei Stegen der ersten Stützstruktur überspannen, in die Zwischenräume derart verformt, dass die Membranabschnitte die Oberfläche des Gegenstands kontaktieren. Sodann wird ein Unterdruck in dem Saugraum des Sauggreifers bereitgestellt, indem der Sauggreifer unter Verformung der Membran entgegen der Kontaktrichtung von dem Gegenstand wegbewegt wird.

Insbesondere kann nach dem Aufsetzen des Sauggreifers auf den Gegenstand der Zentralabschnitt des Sauggreifers derart unter Verformung der Membran in Kontaktrichtung auf den Gegenstand zu bewegt werden, dass sich der Saugraum verkleinert und somit Luft aus dem Saugraum entweicht (bspw. zwischen Gegenstand und Dichtlippe oder durch ein Ventil). Bei Ausgestaltungen mit zweiter Stützstruktur kann das Verlagern des Zentralabschnitts gleichzeitig das Verlagern der Streben des zweiten Stützstruktur und somit das Andrücken der Membranabschnitte in die Zwischenräume durch die Streben umfassen. Zum Bereitstellen des Unterdrucks in dem Saugraum kann dann nach dem Andrücken der Zentralabschnitt wieder entgegen der Kontaktrichtung von dem Gegenstand wegbewegt werden, sodass sich der Saugraum wieder vergrößert (durch Abdichtung der Dichtlippe aber keine Luft mehr in den Saugraum eintreten kann und somit ein Unterdruck entsteht).

Vorzugsweise umfasst das Verformen der Membranabschnitte das Andrücken der Membranabschnitte an die Oberfläche des Gegenstands mittel der zweiten Stützstruktur. Insofern können die Membranabschnitte nach dem Aufsetzen des Sauggreifers auf den Gegenstand durch die Streben der zweiten Stützstruktur an den Gegenstand angedrückt werden.

Die vorstehend genannte Aufgabe wird auch durch eine Handhabungsanlage, umfassend einen Manipulator, insbesondere Roboter, und einen mit dem Manipulator gekoppelten und von diesem verlagerbaren Sauggreifer, gelöst. Die vorstehend im Zusammenhang mit dem Sauggreifer als solchen beschriebenen Vorteile und Merkmale können auch zur Ausgestaltung der Handhabungsanlage dienen, sodass auf vorstehende Offenbarung hierzu verwiesen wird.

Im Rahmen einer vorteilhaften Weiterbildung kann der Sauggreifer einen Unterdruckanschluss aufweisen und die Handhabungsanlage kann eine mit dem Unterdruckanschluss des Sauggreifers strömungsverbundene Unterdruckerzeugungseinrichtung zur Erzeugung von Unterdruck aufweisen. Bei der Unterdruckerzeugungseinrichtung kann es sich beispielsweise um eine Pumpe, ein Gebläse oder einen Ejektor zur Erzeugung von Unterdruck aus Überdruck handeln.

Vorzugsweise umfasst die Handhabungsanlage außerdem eine Steuereinrichtung zum Ansteuern des Manipulators und optional der optionalen Unterdruckerzeugungseinrichtung. Die Steuereinrichtung ist insbesondere dazu eingerichtet, eines der vorstehend beschriebenen Verfahren durchzuführen. Insbesondere weist die Steuereinrichtung eine nicht-flüchtige Datenspeichereinrichtung auf, auf welcher Steuereinweisungen hinterlegt, insbesondere gespeichert, sind, welche, insbesondere bei Ausführung durch eine Datenverarbeitungsanlage der Steuereinrichtung, die Steuereinrichtung dazu veranlassen, eines der vorstehend beschriebenen Verfahren durchzuführen.

Die Erfindung wird im Folgenden anhand der Figuren näher erläutert.

Es zeigen:
Fig. 1 eine vereinfachte schematische Schnittansicht einer ersten beispielhaften Ausgestaltung eines Sauggreifers;
Fig. 2 der Sauggreifer gemäß Fig. 1 in einer Draufsicht;
Fig. 3A,B einen vergrößerten Ausschnitt des Sauggreifers gemäß Figur 2 in einer Schnittansicht entlang der in Fig. 2 eingezeichneten Schnittebne III-III in einer Ausgangskonfiguration (Ansicht A) und in einer Greifkonfiguration (Ansicht B);
Fig. 4 eine vereinfachte schematische Schnittansicht einer weiteren beispielhaften Ausgestaltung eines Sauggreifers mit zweiter Stützstruktur;
Fig. 5 der Sauggreifer gemäß Fig. 4 in einer Draufsicht;
Fig. 6 eine vereinfachte schematische Schnittansicht einer weiteren beispielhaften Ausgestaltung eines Sauggreifers in einer Draufsicht mit zweiter Stützstruktur;
Fig. 7A,B einen vergrößerten Ausschnitt des Sauggreifers gemäß Fig. 6 in einer Schnittansicht entlang der in Fig. 6 eingezeichneten Schnittebne VII-VII in einer Ausgangskonfiguration (Ansicht A) und in einer Greifkonfiguration (Ansicht B);
Fig. 8A,B vereinfachte schematische Darstellungen weiterer beispielhafter Ausgestaltungen eines Sauggreifers ohne zweite Stützstruktur in einer Draufsicht;
Fig. 9A,B vereinfachte schematische Darstellungen weiterer beispielhafter Ausgestaltungen eines Sauggreifers mit zweiter Stützstruktur in einer Draufsicht;
Fig. 10 vereinfachte schematische Darstellungen weiterer beispielhafter Ausgestaltungen eines Sauggreifers mit zweiter Stützstruktur in einer Draufsicht;
Fig. 11 eine vereinfachte schematische Schnittansicht einer weiteren beispielhaften Ausgestaltung eines Sauggreifers mit zweiter Stützstruktur; und
Fig. 12 vereinfachte schematische Darstellungen zur Erläuterung verschiedener beispielhafter Anordnungen von Unterdruckanschlüssen an dem Sauggreifers in einer Draufsicht;
Fig. 13 vereinfachte schematische Darstellungen zur Erläuterung verschiedener beispielhafter Geometrien eines Sauggreifers in einer Draufsicht;
Fig. 14 vereinfachte schematische Darstellung einer weiteren Ausgestaltung eines Sauggreifers mit Membran-Erneuerungseinrichtung; und
Fig. 15 vereinfachte schematische Darstellung einer beispielhaften Ausgestaltung einer Handhabungsanlage.

In der nachfolgenden Beschreibung sowie in den Figuren sind für identische oder einander entsprechende Merkmale jeweils dieselben Bezugszeichen verwendet.

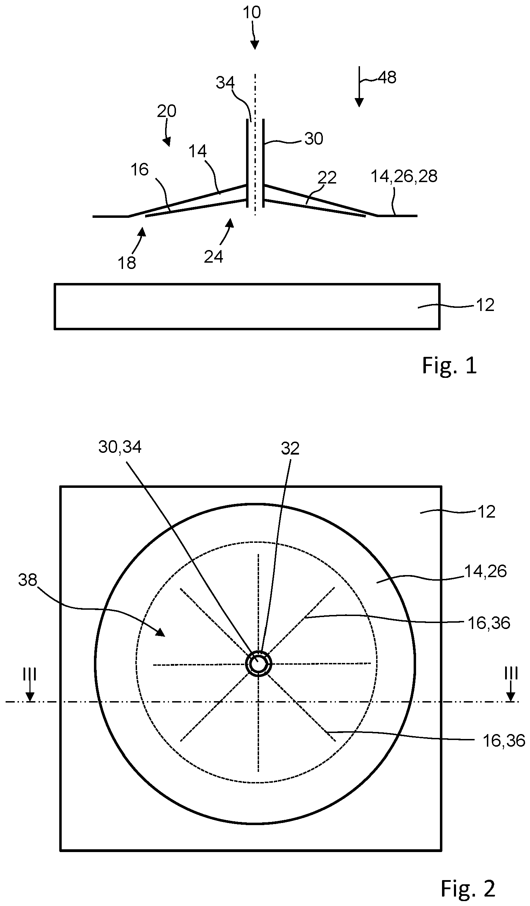

Die Figuren 1 und 2 zeigen in vereinfachter schematischer Seitenansicht eine beispielhafte Ausgestaltung eines Sauggreifers, welcher insgesamt mit dem Bezugszeichen 10 bezeichnet ist. Der Sauggreifer 10 ist zum Ansaugen und somit Greifen eines Gegenstands 12 ausgebildet.

Der Sauggreifer 10 umfasst eine flexible Membran 14, beispielsweise aus einem Latexmaterial oder einem Schaummaterial, und eine erste Stützstruktur 16, auf welcher die Membran 14 aufliegt.

Die Membran weist eine der ersten Stützstruktur 16 und dem Gegenstand 12 zugewandte Saugseite 18 und eine der Saugseite 18 gegenüberliegende Oberseite 20 auf. Wie aus Figur 1 ersichtlich, begrenzt die Membran 14 mit ihrer Saugseite 18 einen Saugraum 22, in welchem die erste Stützstruktur 16 angeordnet ist. Der Saugraum 22 weist eine Saugöffnung 24 auf, welche durch einen Randabschnitt 26 der Membran begrenzt ist. Wie nachfolgend noch im Detail erläutert, bildet der Randabschnitt 26 eine Dichtlippe 28 zur Anlage an den Gegenstand 12.

Im Beispiel erstrecken sich die erste Stützstruktur 16 und die Membran 14 von einem Zentralabschnitt 30 des Sauggreifers 10 nach radial außen.

Der Zentralabschnitt 30 kann mit der ersten Stützstruktur 16 und/oder der Membran 14 verbunden sein. Vorzugsweise ist der Zentralabschnitt 30 durch ein separates Bauteil bereitgestellt, an welchem die erste Stützstruktur 16, bspw. durch eine Schraubverbindung oder eine Schnappverbindung, befestigt ist. Die Membran 14 kann ebenfalls mit dem Zentralabschnitt 30 verbunden sein. Die Membran 14 weist vorzugsweise ein Durchgangsloch 32 auf, durch welches der Zentralabschnitt 30 geführt ist (vgl. Fig. 2). Es ist auch denkbar, dass die Membran 14 den Zentralabschnitt 30 umgreift.

Der Zentralabschnitt 30 weist insbesondere eine mechanische Schnittstelle (nicht im Detail gezeigt) zur Anbindung an einen Manipulator einer Handhabungsanlage (nicht gezeigt) auf.

In dem dargestellten Beispiel weist der Zentralabschnitt 30 einen Unterdruckanschluss 34 auf, über welchen der Saugraum 22 mit Unterdruck beaufschlagbar ist. Der Unterdruckanschluss 34 kann insbesondere zum Anschluss an eine externe Unterdruckversorgung ausgebildet sein.

Bei nicht dargestellten Ausgestaltungen ist es auch denkbar, dass der Zentralabschnitt 30 keinen Unterdruckanschluss 34 aufweist. Insbesondere kann der Saugraum 22 lediglich einseitig durch die Saugöffnung 24 offen sein. Bei einer solchen Ausgestaltung kann der Sauggreifer 10 beispielswiese als Passivgreifer verwendet werden.

Wie aus Figur 2 ersichtlich, weist die erste Stützstruktur 16 eine Mehrzahl von Stegen 36 auf, welche sich von dem Zentralabschnitt 30 nach radial außen erstrecken. Beispielhaft und bevorzugt steht die Membran 14 mit ihrem Randabschnitt 26 in radialer Richtung über die Stege 36 hervor, um so die Dichtlippe 28 zur Anlage an den zu greifenden Gegenstand 12 zu bilden.

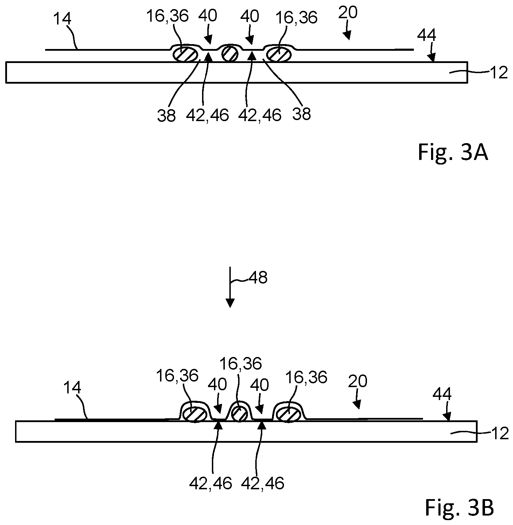

Die Stege 36 sind entlang eines Umfangs um den Zentralabschnitt 30 verteilt, im Beispiel gleichmäßig verteilt, angeordnet, sodass zwischen zwei benachbarten Stegen 36 jeweils ein Zwischenraum 38 gebildet ist. (vgl. auch Fig. 3A) .

Wie aus Figur 3A ersichtlich, überspannt die Membran 14 die Zwischenräume 38 mit einem jeweiligen Membranabschnitt 40.

Die Membran 14 kann auf die erste Stützstruktur 16 lediglich aufgelegt sein. Die Membran 14 kann auch mit den Stegen 36 der erste Stützstruktur 16 verbunden sein, beispielsweise mit den Stegen 3 der ersten Stützstruktur 16 verklebt sein. Letzteres ist insbesondere bei Ausgestaltungen ohne zweite Stützstruktur von Vorteil.

Wie in Figur 3B dargestellt, ist die Membran 14 derart flexibel verformbar, insbesondere dehnbar, ausgebildet, dass die Membranabschnitte 40 in die Zwischenräume 38 zwischen den Stegen 36 verformbar ist, sodass die Membranabschnitte 40 mit einem jeweiligen Kontaktflächenabschnitt 42 die Oberfläche 44 des Gegenstands 12 zwischen den Stegen 36 kontaktieren können. Die Summe der Kontaktflächenabschnitte 42 bildet die vorstehend erwähnte Kontaktfläche 46.

Wie vorstehend erwähnt, ist die Membran 14 insbesondere derart flexibel ausgebildet, dass durch Anlegen eines Unterdrucks in dem Saugraum 22 und somit in den Zwischenräumen 38 die Membran 14 in die Zwischenräume 38 eingesaugt und somit an den Gegenstand 12 angelegt wird.

Zum Greifen eines Gegenstands 12 wird der Sauggreifer 10 zunächst in einer Kontaktrichtung 48 (vgl. Fig. 1) auf den Gegenstand 12 aufgesetzt, sodass der Sauggreifer 10 mit dem Randabschnitt 26 der Membran 14 (Dichtlippe 32) an der Oberfläche 44 des Gegenstands 12 anliegt. Sodann wird der Saugraum 22 und somit die Zwischenräume 38 zwischen den Stegen 36 mit Unterdruck beaufschlagt, insbesondere über den Unterdruckanschluss 34. Bei Überschreiten eines vorgegebenen Unterdrucks in dem Saugraum 22 werden die Membranabschnitte 40 - so wie in Figur 3B gezeigt - in die Zwischenräume 38 zwischen den Stegen 36 eingesaugt, sodass diese mit den Kontaktflächenabschnitten 42 an der Oberfläche 44 des Gegenstands 12 anlegen. Sodann kann der Sauggreifer 10 und der damit angesaugte Gegenstand 12 beispielsweise angehoben und dann verlagert werden.

Zum Ablegen des Gegenstands 12 kann die Unterdruckversorgung abgeschaltet werden, sodass der Saugraum 22 wieder belüftet wird. Die Belüftung kann durch Leckage zwischen dem Randabschnitt 26 der Membran 14 und dem Gegenstand 12 erfolgen. Es ist auch denkbar, dass eine aktive Belüftung des Saugraums 22 über den Unterdruckanschluss 34 oder einen separaten Überdruckanschluss (nicht dargestellt) erfolgt.

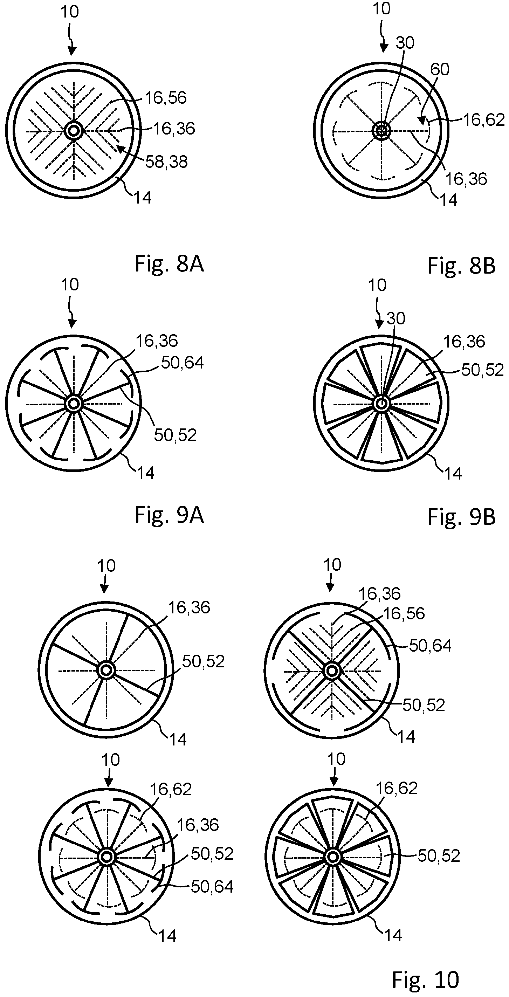

Wie nachfolgend unter Bezugnahme auf die Figuren 8 und 9 erläutert, können die Stege 36 verschiedenartig ausgebildet sein. In vorteilhafter Weise, weisen die Stege 36 einen runden oder ovalen Querschnitt (vgl. Fig. 3A und 3B) auf.

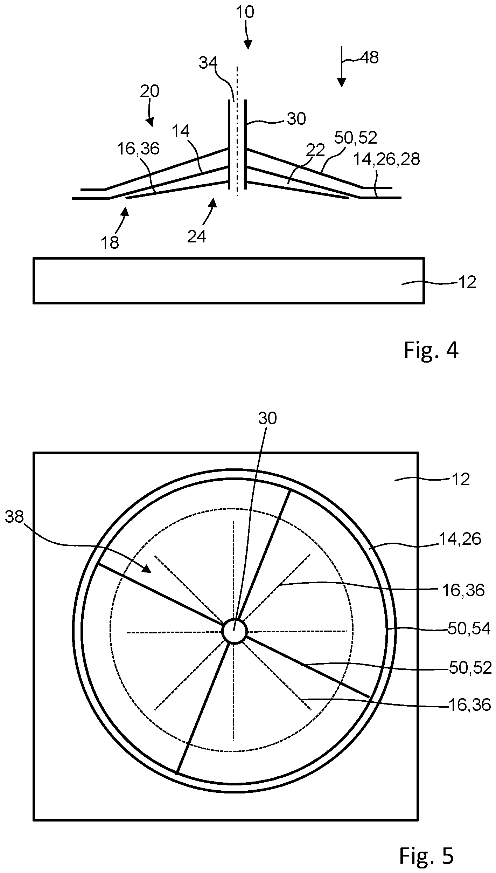

Die Figuren 4 bis 7 zeigen in vereinfachter schematischer Darstellung weitere Ausgestaltungen eines Sauggreifers 10, bei welcher der Sauggreifer 10 zusätzlich zu der ersten Stützstruktur 16 eine zweite Stützstruktur 50 aufweist. Wie aus Figur 4 ersichtlich, ist die zweite Stützstruktur 50 an der Oberseite 20 der Membran 14 angeordnet. Die Membran 14 ist insofern zwischen der ersten Stützstruktur 1 und der zweiten Stützstruktur 50 angeordnet.

Wie in Figur 5 schematisch gezeigt, umfasst die zweite Stützstruktur 50 beispielhaft eine Mehrzahl von Streben 52, welche sich von dem Zentralabschnitt 30 nach radial außen erstrecken. Die Membran 14, die erste Stützstruktur 16 und die zweite Stützstruktur 50 können insbesondere an einem gemeinsamen Zentralabschnitt 30 angeordnet sein.

Wie in Figur 5 beispielhaft zeigt, sind die Streben 52 der zweiten Stützstruktur 50 derart versetzt zu den Stegen 36 der ersten Stützstruktur 16 angeordnet, dass die Streben 52 der zweiten Stützstruktur 50 bei Blickrichtung auf die Oberseite 20 der Membran 14 (vgl. Fig. 5) zwischen den Stegen 36 der ersten Stützstruktur 16 angeordnet sind, also mit den Zwischenräumen 38 zwischen den Stegen 36 überlappen.

Zusätzlich zu einer Stabilisierungsfunktion kann die zweite Stützstruktur 50 insbesondere dazu ausgebildet sein, um die Membranabschnitte 40, welche die Zwischenräume 38 zwischen den Stegen 36 der ersten Stützstruktur 16 überspannen, an einen zu greifenden Gegenstand 12 anzudrücken.

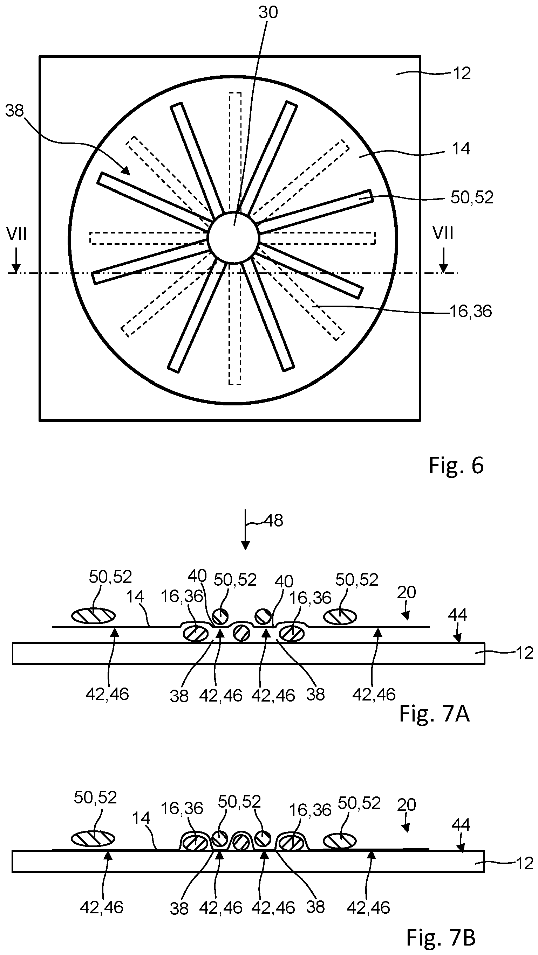

Dies kann beispielhaft dadurch realisiert sein, dass die zweite Stützstruktur 50, insbesondere die Streben 52 der zweiten Stützstruktur 50, in Richtung der ersten Stützstruktur 16 (in Kontaktrichtung 48) verlagerbar oder verformbar ausgebildet sind. Beispielsweise ist es denkbar, dass durch Ausüben einer äußeren Druckkraft auf den Zentralabschnitt 30 die zweite Stützstruktur 50 derart gegen die Membran 14 gedrückt wird, dass die Membranabschnitte 40 in die Zwischenräume 38 zwischen den Stegen 36 der ersten Stützstruktur 16 verformt werden und somit insbesondere mit ihren Kontaktflächenabschnitten 42 eine Oberfläche 44 des Gegenstands kontaktieren (vgl. Fig. 7B).

Wie aus Figur 5 ersichtlich, sind die Streben 52 der zweiten Stützstruktur 50 insbesondere länger als die Stege 36 der ersten Stützstruktur 16, sodass die Streben 52 in radialer Richtung über die Stege 36 hervorstehen, vorzugsweise jedoch nicht über die Membran 14 hervorstehen.

Wie in Figur 5 gezeigt, können die Streben 52 der zweiten Stützstruktur 50 optional an ihren freien Enden über Verbindungsstreben 54 miteinander verbunden sein. (Auf diese Weise kann ein andrücken des Randabschnitts 26 an den zu greifenden Gegenstand 12 begünstigt werden.

Wie vorstehend erwähnt, können die erste Stützstruktur 16 und die zweite Stützstruktur 50 verschiedenartig ausgebildet sein.

Wie in Figur 8A gezeigt, können die Stege 36 verästelt ausgebildet sein. Insofern können von einem Steg 36 einen oder mehrere Äste 56 (Unterstege) abgehen. Bei einer solchen Ausgestaltung können dann zwischen den Ästen 56 Zwischenraumabschnitte 58 gebildet sein, in welche die Membran 14 verformbar ist.

Alternativ oder zusätzlich können die Stege 36 an ihren freien Enden 60 Vorsprünge 62 aufweisen. Wie in Figur 8B gezeigt, können die Vorsprünge 62 beispielsweise gekrümmt ausgebildet sein. Insbesondere können die Vorsprünge 62 auf einer gemeinsamen Kreisbahn um den Zentralabschnitt 30 angeordnet sein.

Die zweite Stützstruktur 50 kann ebenfalls verschiedenartig ausgebildet sein. Zusätzlich zu den vorstehend in Bezug auf die Figuren 6 und 7 beschriebenen Konfigurationen kann die können die Streben 52 der zweiten Stützstruktur 50 beispielsweise ebenfalls an ihren radialen Enden Vorsprünge 64 aufweisen, welche beispielhaft sich in einer Umfangsrichtung um den Zentralabschnitt 30 von den Streben 52 weg erstrecken (vgl. Fig. 9A).

Wie in Figur 9B gezeigt, können sich Streben 52 der zweiten Stützstruktur 50 auch in Erstreckungsrichtung von dem Zentralabschnitt 30 weg verbreitern. Insbesondere können die Streben 52 bei Blickrichtung auf die Oberseite 20 der Membran 14 dreieckförmig ausgebildet sein (vgl. Fig. 9B).

Die verschiedenen Ausgestaltungen der ersten und oder und zweiten Stützstruktur 16, 50 können beliebig miteinander kombiniert werden, wobei besonders vorteilhafte Ausgestaltungen in der Figur 10 beispielhaft dargestellt sind.

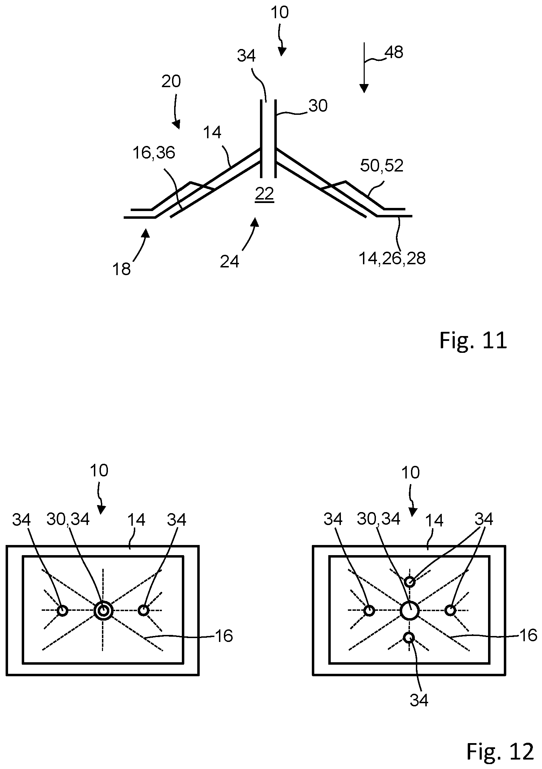

Wie in Figur 11 beispielhaft dargestellt, ist es grundsätzlich auch denkbar, dass die erste Stützstruktur 16 und die zweite Stützstruktur 50 einteilig ausgebildet sind. Insofern ist es denkbar, dass die zweite Stützstruktur 50, insbesondere die Streben 52 der zweiten Stützstruktur 50 sich durch die Membran 14 von der Saugseite 18 zu der Oberseite 20 erstrecken und insofern abschnittsweise auf der Saugseite 18 und abschnittsweise auf der Oberseite 20 der Membran verlaufen.

In Abhängigkeit einer Größe und oder Geometrie des Sauggreifers 10 kann dieser ein oder mehrere Unterdruckanschlüsse 24 zur Versorgung des Saugraums 22 bzw. der Zwischenräume 38 mit Unterdruck aufweisen. In der Figur 12 sind beispielhaft Ausgestaltungen mit mehreren Unterdruckanschlüssen dargestellt, wobei grundsätzlich beliebige Ausgestaltungen denkbar sind.

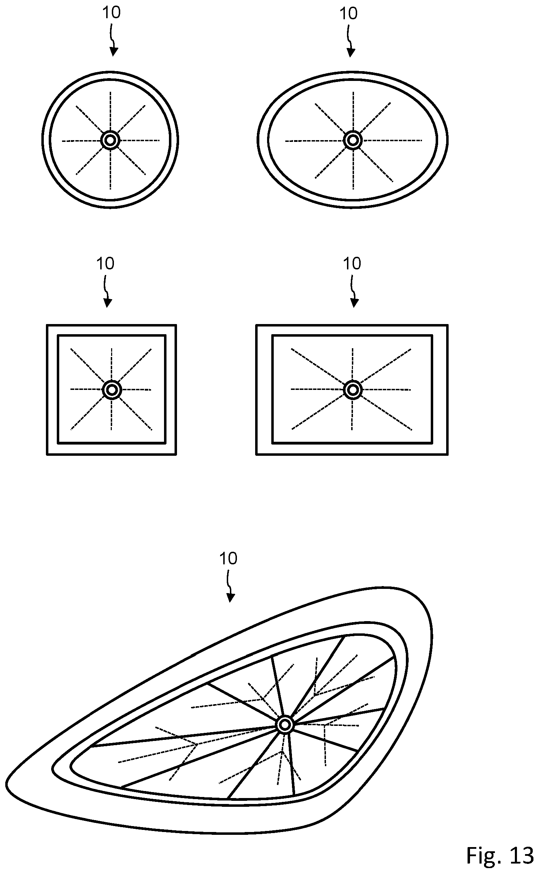

Wie in Figur 13 schematisch dargestellt, kann der Sauggreifer 10 bei Blickrichtung auf die Oberseite 20 der Membran 14 verschiedene Grundformen aufweisen. Beispielsweise kann der Sauggreifer 10 eine runde Grundform oder eine ovale bzw. elliptische Grundform aufweisen. Es ist auch denkbar, dass der Sauggreifer 10 eine rechteckförmige oder quadratische Grundform aufweist. Darüber hinaus kann der Sauggreifer 10 auch eine asymmetrische Grundform aufweisen.

Insbesondere kann der Sauggreifer 10 in Abhängigkeit einer Geometrie eines zu greifenden Gegenstands 12 angepasst sein. Zu diesem Zweck kann es bevorzugt sein, wenn die Stützstrukturen 16, 50 als 3D-gedrucktes Bauteil bereitgestellt sind. Dies ermöglicht es, speziell angepasste Sauggreifer 10 auch für geringe Losgrößen mit vergleichsweise geringem Kosten effizient herzustellen.

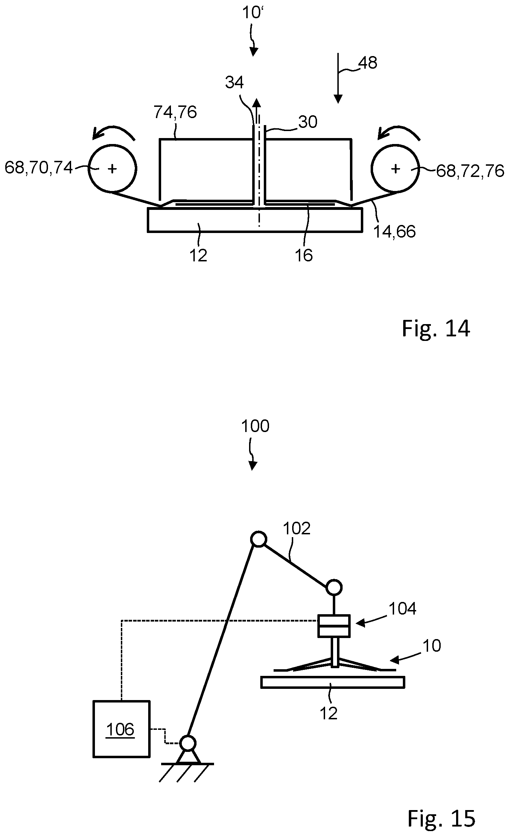

Figur 14 zeigt in vereinfachter schematischer Darstellung eine weitere Ausgestaltung eines Sauggreifers 10', bei welchem die Membran 14 als Flachbandmaterial 66, insbesondere Endlosware ("von der Rolle"), bereitgestellt ist.

Im konkreten Beispiel umfasst der Sauggreifer 10' eine Membran-Erneuerungseinrichtung 68, mit einer Membran-Vorratseinrichtung 70 zum Speichern von neuer, also unbenutzter Membran 14 und eine Membran-Aufnahmeeinrichtung 72 zum Aufnehmen von verbrauchter Membran 14.

Wie in Figur 14 gezeigt, ist die Membran 14 (Flachbandmaterial 66) einenends auf einer Vorratsrolle 74 der Membran-Vorratseinrichtung 70 und anderenends auf einer Aufnahmerolle 76 der Membran-Aufnahmeeinrichtung 72 aufgerollt.

Wie in Figur 14 durch die Pfeile schematisch angedeutet, kann die Membran 14 durch Drehen der Rollen 74, 76 gefördert werden, um einen "frischen" Abschnitt der Membran 14 an der Stützstruktur 16 bereitzustellen. Zu diesem Zweck können die Rollen 74, 76 oder zumindest eine der Rollen 74, 76 angetrieben sein.

Der Sauggreifer 10' gemäß Figur 14 umfasst außerdem eine optionale Andrückeinrichtung 78, im Beispiel Andrückrahmen 80, zum Andrücken der Membran 14 im Bereich des Randabschnitts 26 an den Gegenstand 12. Auf diese Weise kann eine Abdichtung zwischen Sauggreifer 10' und Gegenstand 12 verbessert werden.

Die vorstehend beschriebenen Ausgestaltungen der Membran 14 und der Stützstruktur 16 können auch zur Weiterbildung des Sauggreifers 10' gemäß Figur 14 dienen.

Die Figur 15 zeigt in vereinfachter schematischer Darstellung eine beispielhafte Ausgestaltung einer Handhabungsanlage, welche insgesamt mit dem Bezugszeichen 100 bezeichnet ist.

Die Handhabungsanlage 100 umfasst einen vorstehend beschriebenen Sauggreifer 10 und einen Manipulator 102 zum Verlagern des Sauggreifers 10. Bei dem Manipulator 102 kann es sich beispielhaft um einen Roboter, bspw. 6-Achs-Roboter handeln.

Der Sauggreifer 10 ist mit dem Manipulator 102 verbunden, beispielsweise über eine Kopplungseinrichtung 104. Bei der Kupplungseinrichtung 104 kann es sich beispielsweise um eine Schnellkupplung handeln.

Optional kann die Handhabungsanlage 100 außerdem eine Unterdruckerzeugungseinrichtung (nicht dargestellt) zur Versorgung des Sauggreifer 10 mit Unterdruck aufweisen.

Die Handhabungsanlage 100 umfasst außerdem eine Steuereinrichtung 106, welche dazu ausgebildet ist, den Manipulator 102 und optional die Unterdruckerzeugungseinrichtung anzusteuern. Wie vorstehend erwähnt, umfasst die Steuereinrichtung 104 vorzugsweise eine nicht-flüchtige Datenspeichereinrichtung (nicht dargestellt), auf welcher Steueranweisungen für die Steuereinrichtung 106 hinterlegt sind, insbesondere um eines der vorstehend beschriebenen Verfahren auszuführen.

## Patentansprüche

1. Sauggreifer (10) zum Greifen eines Gegenstands (12) mittels Unterdruck, umfassend
eine flexible Membran (14) und
eine Stützstruktur (16), auf welcher die Membran (14) mit einer Saugseite (18) aufliegt,
wobei die Membran (14) mit ihrer Saugseite (18) einen durch eine Saugöffnung (24) offenen Saugraum (22) begrenzt, in welchem die erste Stützstruktur (16) angeordnet ist, wobei die erste Stützstruktur eine Mehrzahl von Stegen (36) aufweist, welche derart voneinander beabstandet sind, dass zwischen benachbarten Stegen ein Zwischenraum (38) gebildet ist, wobei die Membran die Zwischenräume mit einem jeweiligen Membranabschnitt (40) überspannt, wobei die Membran derart flexibel ausgebildet ist, dass die Membranabschnitte, insbesondere durch Anlegen eines Unterdrucks in dem Saugraum, in die Zwischenräume verformbar sind, um den zu greifenden Gegenstand mit einem jeweiligen Kontaktabschnitt der Saugseite zu kontaktieren.

2. Sauggreifer nach Anspruch 1, wobei sich die Stege (36) der ersten Stützstruktur (16) von einem Zentralabschnitt (30) radial weg erstrecken.

3. Sauggreifer (10 nach Anspruch 1 oder 2, wobei die Membran (14) mit einem Randabschnitt (26) über die Stege (36) der ersten Stützstruktur (16) radial hervorsteht, um eine Dichtlippe (28) zur Anlage an den zu greifenden Gegenstand (12) zu bilden, wobei der Randabschnitt (26) die Saugöffnung (24) begrenzt.

4. Sauggreifer nach einem der vorherigen Ansprüche, außerdem umfassend wenigstens einen, insbesondere zentralen, Unterdruckanschluss (34) zur Versorgung des Saugraums (22) mit Unterdruck

5. Sauggreifer nach einem der vorherigen Ansprüche, wobei die Membran (14) als flexible, insbesondere flexible und elastische Folie ausgebildet ist, und/oder wobei die Membran (14) aus einem Latexmaterial oder einem Schaummaterial herstellt ist.

6. Sauggreifer nach einem der vorherigen Ansprüche, wobei die Stege (36) der ersten Stützstruktur (16) verästelt ausgebildet sind.

7. Sauggreifer nach einem der vorherigen Ansprüche, wobei zumindest eine Teilmenge der Stege (36) der ersten Stützstruktur (16) an einem jeweiligen freien Enden (60) einen Vorsprung (62) aufweist, welcher in Umfangsrichtung um den Zentralabschnitt (30) von dem Steg (36) abkragt.

8. Sauggreifer nach einem der vorherigen Ansprüche, wobei die Membran (14) mit den Stegen (36) der ersten Stützstruktur (16) verbunden ist, insbesondere stoffschlüssig.

9. Sauggreifer nach einem der vorherigen Ansprüche, außerdem umfassend eine zweite Stützstruktur (50), wobei die Membran (14) zwischen der ersten Stützstruktur (16) und der zweiten Stützstruktur (50) angeordnet ist.

10. Sauggreifer nach dem vorherigen Anspruch, wobei die zweite Stützstruktur (50) eine Mehrzahl von Streben (52) aufweist, welche sich radial von dem Zentralabschnitt (30) weg erstrecken.

11. Sauggreifer nach dem vorherigen Anspruch, wobei die Streben (52) der zweiten Stützstruktur (50) und die Stege (36) der ersten Stützstruktur (16) entlang eines Umfangs um den Zentralabschnitt (30) zueinander versetzt angeordnet sind, insbesondere derart, dass eine jeweilige Strebe (52) der zweiten Stützstruktur (50), insbesondere mittig, zwischen zwei Stegen (36) der ersten Stützstruktur (16) angeordnet ist.

12. Sauggreifer nach einem der Ansprüche 10 oder 11, wobei die Streben (52) der zweiten Stützstruktur (50) axial auf die erste Stützstruktur (16) zu bewegbar sind, um die Membranabschnitte (40) in die Zwischenräume (38) zwischen den Stegen (36) der ersten Stützstruktur (16) zu drücken.

13. Sauggreifer nach einem der Ansprüche 10 bis 12, wobei sich die Streben (52) der zweiten Stützstruktur (50) entlang ihrer Erstreckung von dem Zentralabschnitt (30) weg, insbesondere linear, verbreitern.

14. Sauggreifer nach einem der vorherigen Ansprüche, außerdem umfassend einen Membran-Erneuerungseinrichtung (68) zum, insbesondere automatisierten, Erneuern der Membran 14.

15. Verfahren zum Greifen eines Gegenstands (12) mittels eines Sauggreifers (10) nach einem der vorherigen Ansprüche, umfassend:
- Aufsetzen des Sauggreifers (10) in einer Kontaktrichtung (48) auf den Gegenstand (12), sodass der Randabschnitt (26) der Membran (14) den Gegenstand (12) kontaktiert;
- Bereitstellen eines Unterdrucks in dem Saugraum (22) des Sauggreifers (10) derart, dass die Membranabschnitte (40), optional unter zusätzlichem Andrücken in Kontaktrichtung (48) insbesondere mittels einer zweiten Stützstruktur (50), in die Zwischenräume (38) verformt werden, sodass die Kontaktabschnitte (42) der Membranabschnitte (40) den Gegenstand (12) kontaktieren.

16. Verfahren zum Greifen eines Gegenstands (12) mittels eines Sauggreifers (10) nach einem der Ansprüche 1 bis 13, umfassend:
- Aufsetzen des Sauggreifers (10) in einer Kontaktrichtung (48) auf den Gegenstand (12), sodass der Randabschnitt (26) der Membran (14) den Gegenstand (12) kontaktiert;
- Verformen der Membranabschnitte (40) in die Zwischenräume (38), insbesondere durch Andrücken mittels einer zweiten Stützstruktur (50), derart, dass die Kontaktabschnitte (42) der Membranabschnitte (40) den Gegenstand (12) kontaktieren;
- Bereitstellen eines Unterdrucks in dem Saugraum (22) des Sauggreifers (10), indem der Sauggreifer (10) unter Verformung der Membran (14) von dem Gegenstand (12) wegbewegt wird, insbesondere entgegen der Kontaktrichtung (48).

17. Handhabungsanlage (100), umfassend:
- einen Sauggreifer (10) nach einem der Ansprüche 1 bis 13,
- einen Manipulator (102) zum Verlagern des Sauggreifers (10)
- (optional) eine mit einem Unterdruckanschluss (34) des Sauggreifers (10) strömungsverbundene Unterdruckerzeugungseinrichtung zur Erzeugung von Unterdruck;
- eine Steuereinrichtung (104) zum Ansteuern des Manipulators (102) und optional der Unterdruckerzeugungseinrichtung, wobei die Steuereinrichtung (104) dazu eingerichtet ist, das Verfahren nach einem der Ansprüche 14 oder 15 durchzuführen.
